# EUROPEAN PATENT APPLICATION

(11) **EP 2 389 810 A2**
(43) Date of publication of application: **30.11.2011**
(21) Application number: 11166936.2
(22) Date of filing: 20.05.2011
(51) Int. Cl.: A22C 13/00

(54) **High cling food casing**

(30) Priority: 24.05.2010 US 785783
(71) Applicant: Viscofan USA, INC., Danville IL Illinois 61832 (US)
(72) Inventor: Kearby, Ronald S., Williamsport, IN 47993 (US); Yonghua, Li, Urbana, IL 61801 (US); Appleby, Douglas E., Danville, IL 61832 (US)
(74) Representative: WSL Patentanwälte

(57) **Abstract**

A food casing having a water vapor permeable tubular wall including regenerated cellulose and having inner and outer surfaces. The tubular wall has a water vapor permeable interior coating on the inner surface that increases cling to meat contained therein and has an exterior coating on its outer surface that is water impermeable and water vapor permeable. The invention also includes methods for making the casing and methods of using it.

## Description

### Background of the Invention

This invention relates to food casings and more particularly relates to food casings having cling properties for stuffed food products permitting slicing without separation of portions of the casing from sliced product, known as "being knocked off' and to prevent partial separation of casing from products intended to retain the casing, e.g. salamis, summer sausage, etc. Such partial separation often results in formation of unsightly grease pockets at separation locations, known as "greasing" or "fatting out". Casing detachment in slicing in cooked sausage, or "knock-off', is a significant problem in industrial practice.

Solutions to the above problems have been actively pursued for many years and, while improvements have been made, there has been no complete solution to the problems.

For example, a number of patents have been issued that relate to casing adhesion with the contained meat or that relate to fatting out.

U.S. Patent 3,158,488 (Firth; John W., Tee-Pak, Inc., 1964), proposes the use of proteins (gelatin, albumin, etc) as internal coating ingredients in Fibrous casing for the casing to adhere to "dry" sausage emulsion and follow the shrinkage of the sausage during curing. The use of protein to assist in cling has offered improvement but not nearly as much as desired.

U.S. Patent 3,378,379 (Shiner; Edward A., Union Carbide Corporation, 1968), water soluble or water dispersible cationic thermosetting resins were disclosed for improving cling/adhesion behavior of Fibrous casing to dry sausage emulsion during drying process. While cationic resins such as KYMENE ® have offered improvement in retaining cling, again the improvement has not been nearly as much as desired.

U.S. Patent 4,150,697 (Dowell; Arthur M & Judd; Henry E., Tee-Pak, Inc., 1979), a method of utilizing a source of surface activating energy for changing the internal surface of casing was described to increase the adhesion between casing and dry sausage emulsion during drying processing. This has not met with any great success.

U.S. 4,463,778 (Judd; Henry E., Dowell, Jr.; Arthur M. & Rahman; Matiur, Tee-Pak, Inc., 1984), disclosed the use of a vinyl acetate polymer as an adhesion-promoting coating material for dry sausage and again the improved cling was not nearly as much as desired.

U.S. 6,395,356 (Wielockx; Pierre & Borgers; Luc, Teepak Properties, LLC, 2002), and patent application US 20010045236 (Verschueren; Eric M. J. & Fichtner; Reinhard), discloses adhesion-promoting resins and proteins applied in injection into the viscose solution instead of as coating ingredients.

U.S. Patent Application 20070172558 (Hammer; Klaus-Dieter, Kuenzel; Udo, & Effern; Volker), discloses internal coating with both adhesion-promoting material and release-enhancing ingredients and was claimed as suitable for mild or aged dry sausages. Presence of both adhesion and release ingredients was desirable for a minimum meat cling.

All above mainly address the casing adhesion to dry sausages, and are not specifically for solving adhesion problems with cooked wet sausages, especially not for dealing with 'knock-off in slicing cooked sausage.

U.S. Patent 4,356,200 (Hammer; Klaus-Dieter & others, Hoechst, 1982) depicts a casing structure with an outside coating of water-vapor-impermeable film and an inside coating of an adhesion-promoting layer. Such structured casing was claimed suitable for packaging cooked sausage. The casing makes close contact with the filling after it has been soaked in water, filled with a sausage emulsion and simmered or boiled. The casing was, however, not intended to prevent knocking off of casing from sliced sausage and one skilled in the art would not expect that knocking off would be prevented.

Despite all of the efforts in the art, problems with poor meat adhesion continue. For example:

1) With known modifications, there are inconsistent interactions between meat and casing, assessable by increased difficulty in peeling the casing off cooked sausage at a defined condition. Some modification, such as cured internal coating with a content of protein, can result in meat fibers pulled off sausage surface at peeling.

2) Casing detachment at a local section, technically termed "knock-off', still can happen at slicing, most noticeably at sections where sausages are laid on metal bars on racks, or usually described as "bar marks".

3) At occasions in that there is a moistened spot or section in surface of cooked sausage, casing can be peeled off easily at the spot or section and casing inside surface appears slick at that spot or section.

4) There are multiple stages in cooking and before slicing, when the sausage can be susceptible to external surface attack by moisture, such as showering in cooking, chilling in brine, moisture condensation when sausage is removed from chill room and placed in slice room, as well as accelerated moisture condensation caused by the contact between sausage surface and metal bars.

It is also known that a number of materials act as release agents when coated on the inside of casings, i.e. they help with casing removal in applications where removal is desired, e.g. in the case of "skinless" hot dogs. An example of a material that can act as a release agent is QUILON ®, a complex of chromic chloride with a fatty acid, e.g. stearic acid or myristic acid. Such a product, e.g. QUILON C, is the chromic acid complex dispersed or dissolved in a mixture of isopropyl alcohol and acetone, e.g. 35-45% alcohol, 8-12% acetone and 0.7-0.9% HCl. Such complexes are described in U.S. Patent 3,946,135 incorporated herein by reference.

The use of internal coatings of stearato chromic chloride in casings for easy peeling purpose is described in U.S. Patent 2,901,358.

It is further known that food casings can be coated on the exterior with water resistant coatings to prevent casing from drying out or to prevent water from entering contained food product, increasing chances of spoilage, bad appearance and sliming. Such a coating commonly used is polyvinylidene choride.

### Brief Summary of the Invention

The invention includes food casing having a water vapor permeable tubular wall at least partly of regenerated cellulose and having inner and outer surfaces. The tubular wall preferably has a water vapor permeable interior coating on the inner surface that increases cling to meat contained therein and has an exterior coating on its outer surface that is water impermeable and water vapor permeable.

The food casing is usually a fibrous food casing, i.e. one that has a fibrous structure at least partly impregnated with regenerated cellulose. The fibrous structure is usually, but not essentially, a non-woven felt like structure that is most commonly paper. It is also envisioned that the invention can be used for non-reinforced food casings in instances where premature release, knocking off or fatting out may be problems.

The invention also includes the use of the food casing of the invention for encasing protein containing food products such as meat and includes the product having high protein food product encased by the food casing of the invention.

### Detailed Description of the Invention.

In accordance with the invention, it has been entirely unexpectedly discovered that the use of a water vapor permeable-water impermeable coating (VPWI coating) on the exterior of food casing can significantly improve adhesion of casing to meat within the casing. This is especially unexpected since similar coatings can act as release coatings when applied to the interior of the food casing. Significant improvement is shown with respect to any interior surface or interior coating. In other words, when the interior surface of the food casing has no treatment, adhesion is improved with an exterior VPWI coating. Similarly, when the interior surface of the food casing has an adhesion improving coating, e.g. protein and/or cationic resin, an exterior VPWI coating in addition to the adhesion improving interior coating, provides better adhesion than the interior adhesion improving coating alone.

While not being bound by any particular theory, it is believed that a water impermeable outer layer acts as a block to moisture invasion from the outside, thus the casing tends to maintain its dimensional stability and invading water does not adversely affect the cling properties of the interior coating. Further, it is believed that the vapor permeable outer layer permits moisture to escape that would otherwise permit water to affect the cling properties of the interior coating. It is believed that this trapped water is largely responsible for separation of casing from contained food product.

This invention utilizes a water impermeable- water vapor permeable outer coating that causes the significant improvement in non-desired food casing separation from contained food product.

"Water impermeable" as used herein means that the casing wall will resist rewetting when the external casing surface is exposed to liquid water.

"Water vapor permeable" means that the casing wall will transmit at least 1500 grams of water vapor per square meter in a day. The casing of the invention preferably has a transmission rate of at least 2000 grams of water vapor per square meter per day.

The exterior coating may be any food compatible coating that is water impermeable and water vapor permeable. Such coatings should have a water vapor permeability rate that is at least 50 percent and preferably at least 75 percent of the water vapor permeability rate of the base casing.

Examples of such coatings are

Light polyolefin coatings, such as polypropylene, that have been calendared. Such materials are described in U.S. Patent 4,684,568.

Films provided with micropores that permit passage of water vapor but prevent the passage of water as described in U.S. Patent 5,454,471. Again, not to be bound by any particular theory, it is believed that such micropores permit passage of vapor which is essentially of molecular size, but prevent passage of water due to surface tension inhibition. It is to be understood that such pores may be created mechanically or chemically. The size of such pores depend somewhat upon the material involved but can be expected to be smaller than 100 µm and should be closely spaced, e.g. intervening spaces less than three times the diameter of pores, to permit high vapor transfer while still repelling liquid water.

Exceedingly thin coating films may also be used, e.g. from 30 to 100 µm and specially made water impermeable-vapor permeable films may be used as described in U.S. Patent Publication 20080254270.

Some of the above films, while being functional, do not have a vapor transfer rate as high as desired. For example, some of those polymers have been tested in emulsion form as a coating to fibrous casing and were found not to have adhesion to the viscose cellulose surface as high as desired. Further, Some of those polymers have been tested in emulsion form as a coating to fibrous casing and were found not to have stretchability as high as desired.

Especially suitable materials for forming water impermeable-vapor permeable films are trivalent metal (oxidation state 3) complexes with fatty acids. It is believed that such materials do not form a continuous film but form a layer with small discontinuities that allow the passage of water vapor but significantly impare the passage of water. Preferred materials of this type are Werner type chromic chloride complexes with fatty acids. Preferred fatty acids are stearic and myristic acids. Such materials are described in U.S. Patent 3,946,135. Such materials are available from Zaclon LLC under the trademark QUILON®. The QUILON materials are solutions of complexes of chromic chloride with fatty acids in a mixture of alcohol and acetone. An especially desirable material for use in accordance with the invention is QUILON C, which is a solution of myristo and/or stearato chromic chloride in 35 to 45% alcohol, 8-12% acetone, and 0.7 to 0.9 % HCl.

Desirably, the exterior water impermeable-water vapor permeable exterior coating is used in conjunction with an adhesion-promoting inside coating.

Tri-ionic metallic complexes with fatty acids, e.g. especially chromic chloride complexes with stearic and/or myristic acids are particularly suitable for use in such exterior coatings. The vapor permeable non-film-forming character of such metallic complexes allows casing to form a system for regulating moisture transportation. Moisture vapor can escape the system while liquid moisture cannot enter. Liquid moisture therefore has less impact on casing dimension in soaking, showering, and brining. Further, moisture condensation on the casing surface when sausage is removed from cooling is expected to be less and play a minimum role in swelling casing and in affecting the adhesion between sausage meat and casing formed in cooking.

The fatty acid chromic chloride materials are especially suitable since they do not form films that reduce vapor transfer rates. For example, polymers mentioned in U.S. Patent application 20080254270 are film formers and film moisture transfer rates (MVTRs) are usually lower than 1500 g/m2/day from the data presented. Fibrous casing with or without non-barrier coating has MVTRs range around 3000 g/m2/day. Quilon C is not a film former and MVTR is not impaired at all by its application.

In accordance with the invention, QUILON C, has been used as the vapor permeable non-film-forming base material on the outside of casing, working with adhesion-promoting ingredients, including protein, thermo-setting resin, and starch on the inside of the casing. Testing has shown increased casing-sausage adhesion.

Further, such casings have shown integrity in slicing, i.e. the casing remains on sliced product with little or no "knocking off''.

Collection of unsightly grease pockets, i.e. greasing out, has not been observed in casings of the invention.

The following examples serve to illustrate and not limit the present invention.

Test Method I - coated Fibrous casing was stuffed with meat emulsion of a conventional formulation. After designated cooking cycle, cooked sausage chubs were stored in refrigerator for a designated period (1 day, 2 days, or 3 days). Cooked sausage chubs were taken into a chilling room to reach 18°F to 24°F. The chubs were peeled to remove Fibrous casing from sausage meat. A rating was obtained by a group of judges with observations of difficulty in peeling, meat pull off sausage surface by Fibrous casing, and meat pull off sausage surface specifically in bar marks areas. Rating scale is between 1 to 3. Rating 1 represents low level of difficulty in peeling, no or least amount of meat pull off sausage surface in whole piece of peeled off Fibrous casing and in specific area of bar marks. Rating 3 represents high level of difficulty in peeling, covered meat pull in whole piece of peeled off Fibrous casing and in specific area of bar marks. Individual ratings were read against peeling difficulty, total meat pull, and meat pull specifically in bar marks areas. Final rating as indication of Fibrous casing to sausage meat surface was a weighted number of individual ratings.

Test Method II - coated Fibrous casing was stuffed with meat emulsion of a conventional formulation. After designated cooking cycle, cooked sausage chubs were stored in refrigerator for a designated period. Cooked sausage chubs were taken into a chilling room, and then sliced on an automatic Formax slicer with sausage meat temperature between 24°F and 32°F. Knock-off observation was noted.

Example 1 A Fibrous casing was produced with a cling-promoting interior coating comprising a polyamide epichlorohydrin thermosetting polymer and a protein. This casing serves as current standard and was used as a control for the test. The casing was subjected to Test Method I and II. The results were listed in Table I and II respectively.

Example 2 A Fibrous casing with a cling-promoting interior coating same as in Example 1, was also externally coated with a Quilon C solution. Quilon C solution comprises 1 % Quilon C. The casing was externally coated at wet gel state and then went through a drying tunnel. Dried casing showed significantly improved hydrophobicity at outside surface. The casing was subjected to Test Method I. The result was listed in Table 1.

Example 3 A Fibrous casing with a cling-promoting interior coating same as in Example 1, was also externally coated with a Quilon C solution. Quilon C solution comprises 4% Quilon C. The casing was externally coated at wet gel state in a same manner as in Example 2. Dried casing showed excellent hydrophobicity at outside surface. The casing was subjected to Test Method 1. The result was listed in Table I.

Example 4 A Fibrous casing with a cling-promoting interior coating same as in Example 1, was also externally coated with a Quilon C solution. Quilon C solution comprises 2.5% Quilon C. The casing was externally coated at wet gel state in a same manner as in Example 2. Dried casing showed pronounced hydrophobicity at outside surface. The casing was subjected to Test Method II. The result was listed in Table II.

**Table I Test Method I Results**

| Sample in Example | Casing-Meat Adhesion Rating |
|---|---|
| 1 | 1-2 |
| 2 | 2 - 2.5 |
| 3 | 2-3 |

**Table II Test Method II Results**

| Sample in Example | Casing Knock-off in Slicing |
|---|---|
| 1 | Some |
| 4 | None |

Specific method steps that may be used in accordance with the invention include the following:
1. For chrome fatty complex, the aqueous concentration of chrome fatty acid is between 0.1% to 50%, preferably between 0.5% to 10%.
2. The aqueous solution is applied to outside of Fibrous casing, preferably when the casing is still in a wet state.
3. A solution or emulsion of casing-sausage adhesion enhancing ingredients is applied to inside of casing, preferable at wet casing state.
4. The casing is dried through a heating tunnel as in a conventional casing producing process. Both outside and inside additives receive adequate cure through the drying process. Dried reel stock demonstrates pronounced hydrophobic character outside, detectable by either surface tension test, or drop water beading up test.
5. The casing goes through a conversion step, including printing, moisturizing and/or shirring, ready for sausage stuffing.

## Claims

1. A food casing having a water vapor permeable tubular wall comprising regenerated cellulose and having inner and outer surfaces, said tubular wall having an exterior coating on its outer surface that is water impermeable and water vapor permeable.

2. The food casing of claim 1 having a water vapor permeable interior coating on the inner surface that increases cling to meat contained therein.

3. The food casing of claim 2 wherein the tubular wall comprises a fibrous material at least partly impregnated with regenerated cellulose.

4. The food casing of claim 3 wherein the fibrous material is paper.

5. The food casing of claim 2 wherein the interior coating comprises a protein.

6. The food casing of claim 2 wherein the interior coating comprises a cationic resin

7. The food casing of claim 5 wherein the interior coating further comprises a cationic resin.

8. The food casing of claim 1 wherein the exterior coating comprises a complex of a fatty acid with a salt of a metal having at least a trivalent oxidation state.

9. The food casing of claim 1 wherein the exterior coating comprises a complex of chromium halogen salt with a fatty acid.

10. The food casing of claim 2 wherein the exterior coating comprises a complex of a fatty acid with a salt of a metal having at least a trivalent oxidation state.

11. The food casing of claim 3 wherein the exterior coating comprises a complex of chromium halogen salt with a fatty acid.

12. A method for preparing a food product comprising a food casing of claim 1 stuffed with meat.

13. A method for preparing a food product comprising a food casing of claim 2 stuffed with meat adhered to the food casing.

14. A food product comprising a food casing of claim 1 stuffed with meat.

15. A food product comprising a food casing of claim 2 stuffed with meat adhered to the food casing.
